# EUROPÄISCHE PATENTSCHRIFT

(11) **EP 3 406 025 B1**
(45) Veröffentlichungstag und Bekanntmachung des Hinweises auf die Patenterteilung: **15.05.2024**
(21) Anmeldenummer: 17704189.4
(22) Anmeldetag: 03.02.2017
(51) Int. Cl.: H02P 6/17, H02P 29/024, H02H 9/00, H02P 1/02

(54) **MOTORSTARTER UND DIAGNOSEVERFAHREN**
MOTOR STARTER AND DIAGNOSIS METHOD
DÉMARREUR DE MOTEUR ET PROCÉDÉ DE DIAGNOSTIC

(30) Priorität: 08.03.2016 DE 102016203755
(43) Veröffentlichungstag der Anmeldung: 28.11.2018
(73) Patentinhaber: Siemens Aktiengesellschaft, 80333 München (DE)
(72) Erfinder: AHNERT, Karsten, 09112 Chemnitz (DE); ALMEN, Gernot-Dirk, 91052 Erlangen (DE); FIEDLER, Norbert, 09112 Chemnitz (DE); FLOR, Bernd, 91555 Feuchtwangen (DE); NAGY, Franz, 91452 Wilhermsdorf (DE); WOHLRAB, Nico, 09432 Grossolbersdorf (DE); WOLF, Albrecht, 09224 Grüna (DE)
(74) Vertreter: Siemens Patent Attorneys
(86) Internationale Anmeldenummer: PCT/EP2017/052324
(87) Internationale Veröffentlichungsnummer: WO 2017/153098

(56) Entgegenhaltungen:
- EP-A1- 0 806 781
- CN-A- 104 660 107
- DE-A1-102012 215 329
- KR-B1- 101 301 518
- US-A1- 2002 093 774

## Beschreibung

Die Erfindung betrifft einen Motorstarter und Diagnoseverfahren, die während des Betriebs des Motorstarters durchführbar sind.

Aus DE 40 08 002 A1 ist eine Steuerung für einen Stellantrieb bekannt, der mit dreiphasigem Drehstrom angetrieben wird. Der Stellantrieb weist einen Motor auf und in jeder der drei Phasen ist eine Sicherung angeordnet. Jede der Phasen ist auch mit einem Bypass-Schütz versehen, das von einer Halbleiterventilanordnung überbrückt ist. Ferner befindet sich in den Phasen ein Wendeschütz, das ein Umschalten zwischen Rechts- und Linkslauf ermöglicht. Zwischen dem Wendeschütz und dem Bypass-Schütz ist in jeder Phase auch eine Strommesseinrichtung vorgesehen, die den Motorstrom in der jeweiligen Phase erfasst.

DE 10 2005 36 777 A1 offenbart eine dreiphasige Leistungsendstufe mit einer Wendeschützschaltung, die an zwei Phasen angeschlossen ist. In zwei der Phasen ist auch jeweils ein Relais geschaltet, das von einem Halbleiterschaltelement überbrückt wird. In einer weiteren Phase sind auch zwei seriell geschaltete Relais angeordnet.

Aus der EP 0 806 781 A1 ist eine Schaltung zur geschützten Speisung einer elektrischen Last mit Wechselstrom bekannt. Dieser Schaltung umfasst einen elektromechanischen Schalter und einen in Reihe geschalteten bidirektionalen elektronischen Schalter, der sich stromabwärts des Schutzschalters befindet und von einer Steuereinrichtung gesteuert wird, um einen abgestuften Betrieb der Last zu gewährleisten. Parallel zu dem elektronischen Schalter ist ein Nebenschlussschütz geschaltet, das für einen Dauerbetrieb der Last sorgt.

Aus der US 2002/093774 A1 ist ein multifunktionales Hybrid-Schütz bekannt, bei dem je Phase ein Schaltschütz in Form eines MCCB vorgesehen ist, um einen Netzstrom durchzuleiten oder zu unterbrechen, sowie je Phase eine durch einen Relaiskontakt überbrückbare Halbleiterschaltvorrichtung. Dabei bilden die drei Relaiskontakte ein gemeinsames Relais. Das Hybridschütz weist in Stromrichtung von der Spannungsversorgung zum Motor je Phase einen MCCB, eine Strommessvorrichtung sowie die genannten überbrückbaren Halbleiterschaltvorrichtungen auf.

Aus der CN 104 660 107 A ist eine ähnliche Anordnung bekannt, bei welcher die Strommessvorrichtungen in Stromrichtung nach den überbrückbaren Halbleiterschaltvorrichtungen angeordnet sind.

Aus der DE 10 2012 215329 A1 ist ein Diagnoseverfahren für einen speziellen Motorstarter bekannt. Dieser Motorstarter weist in zwei Phasen Halbleiterschalter auf, die von Relaiskontakten überbrückt werden können. Zudem sind Relaiskontakte in Serie zu den Halbleiterschaltern vorhanden. Die dritte Phase weist zwei in Serie geschaltete Relaiskontakte auf. Die insgesamt sechs Relaiskontakte sind drei verschiedenen Relais paarweise zugeordnet. Zudem sind in zwei Phasen in Stromrichtung nach den Relaiskontakten und Halbleiterschaltvorrichtungen Strommessmittel angeordnet.

Aus der KR 101 301 518 B1 ist eine Anordnung mit den Merkmalen des Oberbegriffs des Patentanspruchs 1 bekannt.

Einige der bekannten Lösungen erfordern eine hohe Anzahl an Bauelementen, um ein ausreichendes Maß an Betriebssicherheit zu gewährleisten. Des Weiteren sind einige der bekannten Schaltungen nur aufwendig an unterschiedliche Motorentypen, beispielsweise ein- und mehrphasig angetriebene Elektromotoren, anpassbar. Für einige der bekannten Lösungen ist eine automatische Selbstdiagnose dieser Schaltungen nur mit hohem Aufwand umsetzbar. Es besteht Bedarf an einem Motorstarter, der mit minimalem Aufwand an verschiedene Motortypen anpassbar ist, ein hohes Maß an Betriebssicherheit bietet und dazu eine geringe Anzahl an Bauelementen erfordert. Ferner besteht Bedarf an Diagnoseverfahren für einen solchen Motorstarter, die zuverlässig eine differenzierte Fehleridentifikation erlauben. Die Diagnoseverfahren sollen schnell automatisch durchführbar sein und sich ohne Beeinträchtigung der Handhabbarkeit in den Betrieb des Motorstarters einfügen.

Die skizzierte Aufgabenstellung wird durch den erfindungsgemäßen Motorstarter gelöst. Der Motorstarter ist mit einer Stromversorgung verbunden, über die ein vom Motorstarter gesteuerter Elektromotor angetrieben wird. Der Motorstarter umfasst eine erste und eine zweite Phase, in denen jeweils eine Schaltvorrichtung angeordnet ist. Die Schaltvorrichtungen sind dazu ausgebildet, die jeweilige Phase gezielt zu unterbrechen, also zu öffnen, und zu schließen. Die Schaltvorrichtungen sind jeweils im Wesentlichen als eine Kombination eines elektromechanischen Schalters und eines Halbleiterschalters ausgebildet. Diese sind in einer Bypass-Schaltung angeordnet, so dass sich der Halbleiterschalter und der elektromechanische Schalter gegenseitig überbrücken. Die Schaltvorrichtungen sind so ausgebildet, dass ein Stromfluss in der jeweiligen Phase ermöglicht wird, wenn zumindest der Halbleiterschalter oder der elektromechanische Schalter geschlossen sind. In den Schaltvorrichtungen sind die elektromechanischen Schalter und die Halbleiterschalter einzeln mit einer Steuereinheit des Motorstarters verbunden. Die einzelnen Verbindungen gewährleisten, dass jeder elektromechanische Schalter, der beispielsweise als Relais ausgebildet sein kann, und jeder Halbleiterschalter, der beispielsweise als Thyristor oder Triac ausgebildet sein kann, von der Steuereinheit separat ansteuerbar, also betätigbar, ist. Durch die separate Ansteuerbarkeit der Komponenten der Schaltvorrichtungen ist eine zeitlich exakte und technisch differenzierte Betätigung der Schaltvorrichtungen möglich.

Ein erfindungsgemäßer Motorstarter umfasst zudem eine dritte Phase eine dritte Phase, der ein dritter elektromechanischer Schalter zugeordnet ist. Jedoch weist die dritte Phase keinen Halbleiterschalter in Bypass-Schaltung zum dritten elektromechanischen Schalter auf.

Ferner ist der erfindungsgemäße Motorstarter in der ersten, zweiten und dritten Phase mit einem passiven Überstromschutz versehen. Ein passiver Überstromschutz ist eine Sicherheitsmaßnahme gegen Stromstärken in den Phasen, die zu einer Beschädigung des Elektromotors führen können. Dabei weist der Überstromschutz nur Komponenten wie beispielsweise Sicherungen auf, die ohne einen Eingriff weiterer Komponenten selbsttätig einen sicheren Betriebszustand herbeiführen. Unter einem sicheren Betriebszustand ist beispielsweise eine Unterbrechung der Stromversorgung des Elektromotors zu verstehen, bevor eine Beschädigung eintritt. Erfindungsgemäß weist der passive Überstromschutz je Phase eine Sicherung auf.

Im erfindungsgemäßen Motorstarter ist in zumindest einer der ersten oder zweiten Phasen eine Messvorrichtung zur Messung der Stromstärke in der jeweiligen Phase angeordnet. Die mindestens eine Messvorrichtung ist erfindungsgemäß in mindestens einer der ersten oder zweiten Phasen entlang der Phasenrichtung zwischen dem passiven Überstromschutz und einer der Schaltvorrichtungen angeordnet. Damit sind in mindestens einer der ersten oder zweiten Phasen der passive Überstromschutz, die mindestens eine Messvorrichtung und die zugehörige Schaltvorrichtung in Reihe geschaltet. Entlang der Phasenrichtung bedeutet also entlang des Stromflusses von der Stromversorgung zum Elektromotor unter Normalbedingungen, also bei höchstens vernachlässigbarem Stromfluss quer zwischen den Phasen, beispielsweise durch einen Überspannungsschutz mit Varistoren.

Die erfindungsgemäße Anordnung der mindestens einen Messvorrichtung erlaubt es, durch eine entsprechend gewählte Schaltsequenz beim Aktivieren oder Deaktivieren des Elektromotors selbsttätig eine differenzierte Diagnose des Motorstarters durchzuführen. Es sind in einfacher Weise Schaltzustände herstellbar, bei denen anhand des Vorliegens oder Fehlens eines Stromflusses nicht nur allgemein ein Fehler im Betriebsablauf feststellbar ist. Vielmehr ist eine genaue Diagnose möglich, durch die ein Defekt einer einzelnen Komponente, z.B. eines Halbleiterschalters, oder einer überschaubaren Anzahl an Komponenten erkennbar ist. Der erfindungsgemäße Motorstarter kommt hierbei mit einer geringen Anzahl an Bauelementen aus und bietet dabei gleichzeitig einen erhöhten Funktionsumfang. Die Diagnosefunktion erlaubt insbesondere die Verwendung des erfindungsgemäßen Motorstarters für technische Anwendungen mit hohen Sicherheitsanforderungen. Darüber hinaus ist der erfindungsgemäße Motorstarter sowohl für den Einsatz an dreiphasigen als auch an einphasigen Elektromotoren geeignet. Des Weiteren kann der erfindungsgemäße Motorstarter als Direktstarter oder Wendestarter ausgebildet sein. Hierdurch wird ein vergrößertes mögliches Einsatzspektrum erschlossen. Darüber hinaus verwirklicht der erfindungsgemäße Motorstarter das Prinzip einer 2-von-3-Redundanz, auch 2-out-of-3-Redundanz oder kurz 2oo3-Redundanz genannt. Aufgrund der geringen Anzahl an Bauelementen kann im beanspruchten Motorstarter nur eine reduzierte Anzahl an möglichen Schaltzuständen vorliegen, so dass bereits mit einer 1oo2-Redundanz ein hohes Maß an Betriebssicherheit erzielbar ist.

Erfindungsgemäß ist zumindest eine der Sicherungen im passiven Überstromschutz derart dimensioniert, dass sie bei einer Referenzstromstärke eine Auslösedauer aufweist, die im Wesentlichen einer Reaktionsdauer einer der Schaltvorrichtungen entspricht. Die Reaktionsdauer einer Schaltvorrichtung ist die Zeit, die vom Erkennen eines Überstromereignissen bis zur Durchführung einer geeigneten Gegenmaßnahme, also dem Öffnen der Schaltvorrichtung, verstreicht. Zur Reaktionszeit gehört unter anderem die Schaltdauer der Schaltvorrichtung, insbesondere des zugehörigen elektromechanischen Schalters. Folglich bildet die Referenzstromstärke den Grenzfall, in dem die Schaltvorrichtung in einer der Phasen genauso schnell auf ein Überstromereignis reagiert wie die zugehörige Sicherung.

In einer bevorzugten Ausführungsform der Erfindung weist zumindest eine der Schaltvorrichtungen eine Dauerbetriebsstromgrenze auf, die im Wesentlichen einem bestimmungsgemäßen Betriebsstrom des Elektromotors entspricht. Unter dieser Entsprechung ist hierbei im Wesentlichen eine betragsmäßige Gleichsetzung unter Berücksichtigung technisch üblicher Fertigungs- und Messtoleranzen zu verstehen. Für den Dauerbetrieb des Elektromotors ist insbesondere der elektromechanische Schalter vorgesehen, so dass dieser im Wesentlichen auf diese Dauerbetriebsstromgrenze hin dimensioniert ist. Die Schaltvorrichtung weist im erfindungsgemäßen Motorstarter damit reduzierte Auslegungsreserven gegenüber dem bestimmungsgemäßen Dauerbetrieb auf. Hierdurch wird eine erhöhte Bauteilausnutzung verwirklicht und die Gesamteffizienz des Motorstarters gesteigert. Der erfindungsgemäße Motorstarter kommt folglich mit einfacheren, geringer dimensionierten Bauelementen aus, die gleichzeitig kosteneffizienter sind.

Weiter bevorzugt ist mindestens eine der Schaltvorrichtungen dazu ausgebildet, der Referenzstromstärke für die Länge der Reaktionsdauer standzuhalten. Die Reaktionsdauern liegen in einem Bereich von 5 ms bis 25 ms, bevorzugt von 10 ms bis 20 ms, weiter bevorzugt von 13 ms bis 17 ms, besonders bevorzugt bei 15 ms. Derartige Dauern erfordern nur geringfügige Überdimensionierung gegenüber der Dauerbetriebsstromgrenze. Infolgedessen wird bei den Sicherungen eine weiter erhöhte Ausnutzung der eingesetzten Komponenten erzielt. Im beanspruchten Motorstarter können somit im Wesentlichen zwei Typen von Überstromereignissen vorliegen. Der erste Typ ist ein sogenanntes unterkritisches Überstromereignis, bei dem die Stromstärke unter der Referenzstromstärke liegt und zuerst eine der Schaltvorrichtungen die Stromversorgung in der jeweiligen Phase den Stromfluss unterbricht. Der zweite Typ ist ein sogenanntes überkritisches Überstromereignis, bei dem die Stromstärke über der Referenzstromstärke liegt und die Sicherung den Stromfluss in der entsprechenden Phase unterbricht. Der Überlappungsbereich zwischen beiden Typen ist minimiert, so dass auch hier eine hohe Bauelementausnutzung erzielt wird. Die erfindungsgemäße Lösung nutzt mit der entsprechenden angepassten Dimensionierung der Sicherung unter Berücksichtigung einer Schaltvorrichtung einen überraschend einfachen Parameter um einen Motorstarter bereitzustellen, der bei reduzierter Bauelementanzahl ein hohes Maß an Sicherheit bietet und gleichzeitig einfach und wirtschaftlich in der Herstellung ist.

Der erfindungsgemäße Motorstarter kann derart aufgebaut sein, dass in der ersten Phase eine erste Messvorrichtung angeordnet ist und in der zweiten Phase eine zweite Messvorrichtung. Die Verwendung von zwei Messvorrichtungen bietet auch bei dreiphasigen Elektromotoren, also Motorstartern, die alle drei Phasen schalten, eine detaillierte Diagnosemöglichkeit. Dadurch kann eine zusätzliche dritte Messvorrichtung eingespart werden, ohne den Funktionsumfang des Motorstarters einzuschränken.

In einer weiteren Ausführungsform der Erfindung ist der Motorstarter an zwei Phasen, vorzugsweise der zweiten und einer dritten Phase, mit einer Wendeschaltvorrichtung versehen. Mit der Wendeschaltvorrichtung bildet der Motorstarter einen Wendestarter. Die Wendeschaltvorrichtung umfasst dabei zwei Wende-Relais und zwei Direkt-Relais. Die Wende-Relais und Direkt-Relais sind derart mit zwei Phasen verbunden, dass diese gezielt vertauschbar sind. Hierzu sind die Wende-Relais und die Direkt-Relais mit der Steuereinheit des Motorstarters verbunden und separat ansteuerbar und betätigbar. Die Wende-Relais und Direkt-Relais sind vorzugsweise funktionell koordiniert ansteuerbar, so dass der Elektromotor zwischen Rechtslauf, Linkslauf und Stillstand, also Stromunterbrechung, ansteuerbar ist. Der Aufbau des erfindungsgemäßen Motorstarters ist damit für die am weitesten verbreiteten Bauformen von Motorstartern geeignet. Der beanspruchte Motorstarter kann somit bei minimalem Anpassungsaufwand in unterschiedlichen Varianten gefertigt werden. Infolgedessen ist der erfindungsgemäße Motorstarter in der Herstellung besonders kosteneffizient.

Die zugrundeliegende Aufgabenstellung wird auch durch das im Folgenden beschriebene Diagnoseverfahren für einen erfindungsgemäßen Motorstarter gelöst, der als Direktstarter ausgebildet ist. Dabei ist der Elektromotor dreiphasig ausgebildet und zum Antreiben einer mechanischen Last vorgesehen. Das Diagnoseverfahren erfolgt im Zuge einer Aktivierungssequenz des Motorstarters. In einem ersten Verfahrensschritt, Schritt a), wird der Motorstarter in einem inaktiven Zustand bereitgestellt. Im inaktiven Zustand sind sämtliche schaltfähigen Komponenten des Motorstarters, also beispielsweise Halbleiterschalter und elektromechanische Schalter in einem geöffneten Zustand. In einem weiteren Verfahrensschritt, Schritt b), wird die erste Phase mit einem ersten elektromechanischen Schalter geschlossen. Infolge der Bypass-Schaltung in der Schaltvorrichtung liegt hierdurch in der ersten Phase eine leitfähige Verbindung von der Stromversorgung zum Elektromotor vor. In einem weiteren anschließenden Verfahrensschritt, Schritt c), wird die erste Phase wieder geöffnet und mit einem dritten elektromechanischen Schalter die dritte Phase geschlossen. Bei diesem Schritt wird die leitfähige Verbindung zwischen entlang der ersten Phase wieder unterbrochen und eine leitfähige Verbindung zwischen der Stromversorgung und dem Elektromotor in der dritten Phase hergestellt. In einem weiteren anschließenden Verfahrensschritt, Schritt d), werden ein erster Halbleiterschalter in der ersten Phase und ein zweiter Halbleiterschalter in der zweiten Phase geschlossen. Das Schließen erfolgt hierbei durch ein aktives Ansteuern. Unter aktivem Ansteuern ist dabei jegliche Form von Betätigung zu verstehen, bei der der entsprechende Halbleiterschalter unter Einsatz von elektrischer Energie eine leitfähige Verbindung in der entsprechenden Phase herstellt. Bei einem Wegfall der eingesetzten elektrischen Energie, und damit der aktiven Ansteuerung, fällt der Halbleiterschalter wieder in einen Zustand zurück, in dem in der entsprechenden Phase keine leitfähige Verbindung mehr vorliegt.

In einem weiteren folgenden Verfahrensschritt, Schritt e), erfolgen ein Schließen des ersten elektromechanischen Schalters in der ersten Phase und ein Schließen des zweiten elektromechanischen Schalters in der zweiten Phase. Darauf folgt ein Verfahrensschritt, Schritt f), in dem das aktive Ansteuern der Halbleiterschalter ausgeleitet, d. h. beendet, wird und diese in einen geöffneten Zustand zurückfallen. Infolge der Bypass-Schaltung zwischen den Halbleiterschaltern und den elektromechanischen Schaltern liegt im bestimmungsgemäßen Betrieb weiterhin eine leitfähige Verbindung in der ersten und zweiten Phase vor. Die skizzierten Betätigungen der elektromechanischen Schalter und der Halbleiterschalter werden durch die Steuereinheit des Motorstarters ausgelöst. Im Zuge der beschriebenen Aktivierungssequenz wird der Elektromotor in Betrieb genommen.

In der ersten und zweiten Phase des Motorstarters sind entsprechend die erste und zweite Messvorrichtung angeordnet, die dazu ausgebildet sind, Stromflüsse in der jeweiligen Phase zu messen und die zugehörigen Messdaten an die Steuereinheit zu melden. Basierend hierauf ist mittels der Steuereinheit das Vorliegen eines Stromflusses in der jeweiligen Phase erkennbar. In jedem Stadium der Aktivierungssequenz ist im bestimmungsgemäßen, also fehlerfreien, Zustand des Motorstarters eindeutig definiert, ob ein Stromfluss vorzuliegen hat oder nicht. Eine Abweichung hiervon stellt einen mittels der Steuereinheit erfassbaren Fehler des Motorstarters dar.

Im erfindungsgemäßen Verfahren wird ein Fehler des Motorstarters erkannt, wenn beim Schließen des elektromechanischen Schalters im Schritt b) in der ersten und/oder zweiten Phase mittels mindestens einer der Messvorrichtungen ein Stromfluss erkannt wird. Hierdurch ist insbesondere ein Defekt des zweiten elektromechanischen Schalters oder des zweiten Halbleiterschalters in der zweiten Phase, oder ein Defekt des dritten elektromechanischen Schalters in der dritten Phase erkennbar. Zusätzlich oder alternativ wird im erfindungsgemä-βen Diagnoseverfahren ein Fehler des Motorstarters erkannt, wenn im Schritt c) nach dem Schließen des dritten elektromechanischen Schalters in der dritten Phase mittels mindestens einer der Messvorrichtungen in der ersten und/oder zweiten Phase ein Stromfluss erfasst wird. Hierdurch wird insbesondere ein Defekt des ersten elektromechanischen Schalters oder des ersten Halbleiterschaltern in der ersten Phase erkannt.

Zusätzlich oder alternativ wird im erfindungsgemäßen Verfahren ein Fehler des Motorstarters erkannt, wenn nach dem Schließen der Halbleiterschalter im Schritt d) mittels mindestens einer der Messvorrichtungen in der ersten und/oder zweiten Phase ein Stromfluss von Null erfasst wird. Unter einem Stromfluss von Null ist hierbei ein Stromfluss zu verstehen, der betragsmäßig für den Betrieb des Elektromotors deutlich zu niedrig ist und nicht auf einen technischen Defekt im Motorstarter zurückführbar ist. Für die Erfassung des Stromflusses von Null sind die üblichen Messtoleranzen anzuwenden.

Die zugrundeliegende Aufgabenstellung wird auch durch das im Folgenden skizzierte weitere Diagnoseverfahren für einen erfindungsgemäßen Motorstarter gelöst, der als Wendestarter ausgebildet ist. Der Motorstarter ist dreiphasig ausgebildet und mit einem dreiphasigen Elektromotor verbunden, der zum Antreiben einer mechanischen Last vorgesehen ist.

Das weitere Diagnoseverfahren erfolgt im Zuge einer Aktivierungssequenz des Motorstarters. In einem ersten Verfahrensschritt, Schritt a), wird der Motorstarter in einem inaktiven Zustand bereitgestellt. Im inaktiven Zustand sind sämtliche schaltfähigen Komponenten des Motorstarters, also beispielsweise Halbleiterschalter und elektromechanische Schalter, Wende-Relais und Direkt-Relais, in einem geöffneten Zustand. In einem weiteren Verfahrensschritt, Schritt b), wird die erste Phase mit einem ersten Halbleiterschalter und die zweite Phase mit einem zweiten Halbleiterschaler geschlossen. Das Schließen erfolgt durch ein aktives Ansteuern der Halbleiterschalter. Infolge der Bypass-Schaltung in der Schaltvorrichtung liegen hierdurch in der ersten und zweiten Phase leitfähige Verbindungen von der Stromversorgung zum Elektromotor vor. In einem weiteren anschließenden Verfahrensschritt, Schritt c), werden der erste und zweite Halbleiterschalter wieder geöffnet. Ebenso werden in der Wendeschaltvorrichtung die Wende-Relais oder die Direkt-Relais geschlossen, die an der zweiten und der dritten Phase angeschlossen sind. Bei diesem Schritt wird eine leitfähige Verbindung zwischen der Stromversorgung und dem Elektromotor in der dritten Phase hergestellt. In einem weiteren anschließenden Verfahrensschritt, Schritt d), werden der erste Halbleiterschalter in der ersten Phase und der zweite Halbleiterschalter in der zweiten Phase wieder geschlossen. Das Schließen erfolgt auch hierbei durch ein aktives Ansteuern.

In einem weiteren folgenden Verfahrensschritt, Schritt e), erfolgen ein Schließen des ersten elektromechanischen Schalters in der ersten Phase und ein Schließen des zweiten elektromechanischen Schalters in der zweiten Phase. Darauf folgt ein Verfahrensschritt, Schritt f), in dem das aktive Ansteuern der Halbleiterschalter ausgeleitet wird und diese in einen geöffneten Zustand zurückfallen. Infolge der Bypass-Schaltung zwischen den Halbleiterschaltern und den elektromechanischen Schaltern liegt im bestimmungsgemäßen Betrieb weiterhin eine leitfähige Verbindung in der ersten und zweiten Phase vor. Die skizzierten Betätigungen der elektromechanischen Schalter und der Halbleiterschalter werden durch die Steuereinheit des Motorstarters ausgelöst. Im Zuge der beschriebenen Aktivierungssequenz wird der Elektromotor in Betrieb genommen.

In der ersten und zweiten Phase des Motorstarters sind entsprechend die erste und zweite Messvorrichtung angeordnet, die dazu ausgebildet sind, Stromflüsse in der jeweiligen Phase zu messen und die zugehörigen Messdaten an die Steuereinheit zu melden. Basierend hierauf ist mittels der Steuereinheit das Vorliegen eines Stromflusses in der jeweiligen Phase erkennbar. In jedem Stadium der Aktivierungssequenz ist im bestimmungsgemäßen, also fehlerfreien, Zustand des Motorstarters eindeutig definiert, ob ein Stromfluss vorzuliegen hat oder nicht. Eine Abweichung hiervon stellt einen mittels der Steuereinheit erfassbaren Fehler des Motorstarters dar.

Im weiteren erfindungsgemäßen Verfahren wird ein Fehler des Motorstarters erkannt, wenn beim Schließen der Halbleiterschalter im Schritt b) in der ersten und/oder zweiten Phase mittels mindestens einer der Messvorrichtungen ein Stromfluss erkannt wird. Hierdurch ist insbesondere ein Defekt eines der Wende-Relais oder eines der Direkt-Relais in der zweiten bzw. dritten Phase erkannt wird. Zusätzlich oder alternativ wird im erfindungsgemäßen Diagnoseverfahren ein Fehler des Motorstarters erkannt, wenn im Schritt c) nach dem Öffnen der Wendeschaltvorrichtung mittels mindestens einer der Messvorrichtungen in der ersten und/oder zweiten Phase ein Stromfluss erfasst wird. Hierdurch wird insbesondere ein Defekt des ersten und/oder zweiten elektromechanischen Schalters oder des ersten/und oder zweiten Halbleiterschalters in der ersten bzw. zweiten Phase erkannt.

Zusätzlich oder alternativ wird im weiteren erfindungsgemäßen Verfahren ein Fehler des Motorstarters erkannt, wenn nach dem Schließen der Halbleiterschalter im Schritt d) mittels mindestens einer der Messvorrichtungen in der ersten und/oder zweiten Phase ein Stromfluss von Null erfasst wird. Unter einem Stromfluss von Null ist hierbei ein Stromfluss zu verstehen, er betragsmäßig für den Betrieb des Elektromotors deutlich zu niedrig ist und nicht auf einen technischen Defekt im Motorstarter zurückführbar ist. Für die Erfassung des Stromflusses von Null sind die üblichen Messtoleranzen anzuwenden.

Die erfindungsgemäßen Diagnoseverfahren erfordern eine Aktivierungssequenz mit einer reduzierten Anzahl an Schritten und bietet gleichzeitig die Möglichkeit, Fehler im Motorstarter, insbesondere Defekte von Komponenten, zu lokalisieren oder zumindest eng einzukreisen. Die Diagnoseverfahren greifen auf verhältnismäßig einfache Messdaten zurück, nämlich einer Identifizierung, ob ein Stromfluss vorliegt oder nicht. Eine betragsmäßig exakte Auflösung der Messdaten ist entbehrlich. Darüber hinaus sind die erfindungsgemäßen Diagnoseverfahren in allen Varianten durch eine entsprechende Software in eine Steuereinheit des Motorstarters einprogrammierbar. Mittels einer Parametrierung des Motorstarters ist ohne Weiteres die entsprechende Variante des Diagnoseverfahrens auswählbar. Eine derartige Software erfordert nur geringen Speicher- und Rechenaufwand und kann deshalb auch auf Hardware, insbesondere Mikrocontrollern, mit wenig Rechenleistung umgesetzt werden. Ferner sind die erfindungsgemäßen Diagnoseverfahren in beiden skizzierten Varianten in einem Zeitraum von bis zu 150 ms, insbesondere von bis zu 100 ms, besonders bevorzugt von bis zu 85 ms ausführbar. Eine derart schnelle Diagnose kann ohne Beeinträchtigung der Handhabung des Motorstarters bei jeder Aktivierung dessen durchgeführt werden. Durch eine damit mögliche kontinuierliche Diagnose des Motorstarters wird ein hohes Maß an Sicherheit erzielt. Die Lokalisierung von Fehlern im Motorstarter vereinfacht auch dessen Reparatur. Insgesamt werden robuste, automatisch durchführbare und differenzierte Diagnoseverfahren zur Verfügung gestellt, die auf Motorstartern mit geringem Hardware-Aufwand realisierbar ist.

Bei einer bevorzugten Ausführungsform der erfindungsgemäßen Diagnoseverfahren wird ein Defekt des ersten oder zweiten Halbleiterschalters anhand von Messergebnissen in der ersten und zweiten Phase in den Schritten d) und e) erkannt. Dabei wird zunächst im Schritt d) nach dem Schließen der Halbleiterschalter ein Stromfluss in der ersten und/oder zweiten Phase erfasst. Ferner wird im Schritt e) nach dem Schließen der elektromechanischen Schalter mittels der mindestens einen Messvorrichtung ein Stromfluss von Null erfasst wird.

Alternativ kann in den erfindungsgemäßen Diagnoseverfahren erfasst werden, wenn keine elektrische Last angeschlossen ist. Eine solche elektrische Lastfreiheit wird durch eine Auswertung der mindestens einen Messvorrichtung in den Verfahrensschritten d) und e). Dabei wird zunächst im Schritt d) nach dem Schließen der Halbleiterschalter ein Stromfluss von Null erfasst. Ferner wird im Schritt e) nach dem Schließen der elektromechanischen Schalter von der mindestens einen Messvorrichtung in der ersten und zweiten Phase auch ein Stromfluss von Null erfasst. Das erfindungsgemäße Verfahren erlaubt damit sowohl bei Wendestartern und Direktstartern eine weiter differenzierte Diagnose über den Zustand des Motorstarters. Dadurch kann eine größere Zahl an Fehlerfällen automatisch erkannt werden, so dass ein erhöhtes Maß an Betriebssicherheit vorliegt.

Bei einer weiteren Ausführungsform der erfindungsgemäßen Diagnoseverfahren wird ein Defekt des ersten und/oder zweiten elektromechanischen Schalters erkannt, wenn im Schritt f) nach dem Ausleiten des aktiven Ansteuerns der Halbleiterschalter mindestens eine der Messvorrichtungen einen Stromfluss von Null erfasst. Auch hierdurch wird die Möglichkeit der Fehlerdiagnose weiter ausgebaut.

Die Erfindung wird im Folgenden anhand der Ausführungsformen in den Figuren 1 bis 4 näher erläutert. Es zeigen im Einzelnen
- FIG 1: schematisch den Aufbau einer ersten Ausführungsform des erfindungsgemäßen Motorstarters;
- FIG 2: schematisch den Aufbau einer zweiten Ausführungsform des erfindungsgemäßen Motorstarters;
- FIG 3: ein Kennlinien-Diagramm einer Sicherung des passiven Überstromschutzes;
- FIG 4: schematisch den Ablauf der erfindungsgemäßen Diagnoseverfahren.

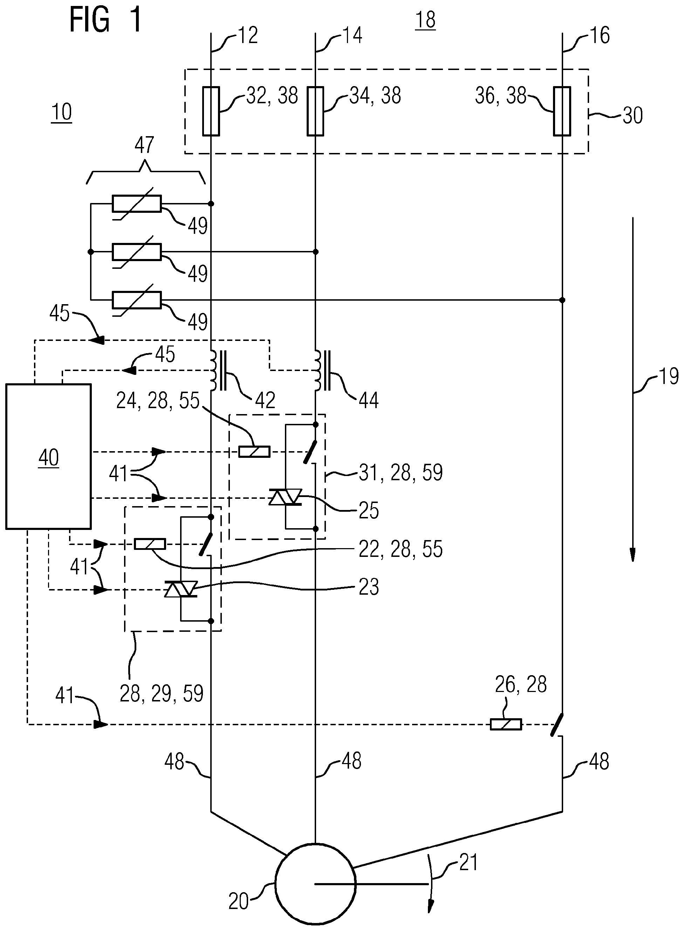

In FIG 1 ist schematisch ein erfindungsgemäßer Motorstarter 10 abgebildet, der als Direktstarter zum Antrieb eines dreiphasigen Elektromotors 20 ausgebildet ist. Der Elektromotor 20 dient zum Antreiben einer mechanischen Last 21 und wird durch eine nicht näher dargestellte Stromversorgung 18 gespeist. Der Motorstarter 10 weist eine erste, eine zweite und eine dritte Phase 12, 14, 16 auf, die mit einem passiven Überstromschutz 30 versehen sind. Der passive Überstromschutz 30 weist eine erste, zweite und dritte Sicherung 32, 34, 36 auf, die auf eine Referenzstromstärke 38 hin ausgelegt sind. Im Motorstarter 10 ist auch ein Überspannungsschutz 47 mit mehreren gekoppelten Varistoren 49 angeordnet. Die Varistoren 49 zweigen von den Phasen ab und führen im bestimmungsgemäßen Betrieb keinen Strom. Des Weiteren ist im Motorstarter 10 gemäß FIG 1 in der ersten Phase 12 eine erste Schaltvorrichtung 29 vorgesehen.

Die erste Schaltvorrichtung 29 umfasst einen ersten elektromechanischen Schalter 22 und einen Halbleiterschalter 23, die in einer Bypass-Schaltung angeordnet sind. Dadurch kann entlang einer Phasenrichtung 19 eine leitfähige Verbindung in der ersten Phase 12 hergestellt werden. Der erste elektromechanische Schalter 22 dient dazu, den in der ersten Phase 12 bestimmungsgemäßen vorliegenden Betriebsstrom 48 dauerhaft zu übertragen. Der erste elektromechanische Schalter 22 ist derart dimensioniert, dass er eine Dauerbetriebsstromgrenze 28 aufweist, die im Wesentlichen dem bestimmungsgemäßen Betriebsstrom 48 entspricht. Infolgedessen weist der erste elektromechanische Schalter 22 gegenüber dem Dauerbetriebszustand verringerte Kapazitätsreserven auf. Ferner weist der erste elektromechanische Schalter 22 eine Betätigungszeit 55 auf. Darunter ist die Dauer zu verstehen, die zwischen dem Erhalten eines Steuerbefehls 41 von einer Steuereinheit 40 des Motorstarter 10 und der abgeschlossenen Umsetzung des Schaltbefehls 41 verstreicht. Der erste elektromechanische Schalter 22 ist langsamer als der erste Halbleiterschalter 23 und definiert somit die Reaktionszeit 59 der ersten Schaltvorrichtung 29.

In der zweiten Phase 14 ist eine zweite Schaltvorrichtung 31 angeordnet, die einen zweiten elektromechanischen Schalter 24 und einen zweiten Halbleiterschalter 25 aufweist. Die zweite Schaltvorrichtung 31 entspricht in Aufbau und Funktionsweise der ersten Schaltvorrichtung 29, so dass die gleichen Bezugszeichen auch an der zweiten Schaltvorrichtung 31 die gleiche Bedeutung haben.

In der dritten Phase 16 ist ein dritter elektromechanischer Schalter 26 angeordnet, der in puncto Dauerbetriebsstromgrenze 28 so ausgelegt ist wie der erste und zweite elektromechanische Schalter 22, 24. Auch der dritte elektromechanische Schalter 26 ist separat über Steuerbefehle 41 von der Steuereinheit 40 betätigbar. Des Weiteren sind in der ersten und zweiten Phase 12, 14 jeweils eine Messvorrichtung 42,44 angeordnet, die dazu ausgebildet sind, die Stromstärke in den jeweiligen Phasen 12, 14 zu erfassen. Die erste Messvorrichtung 42 in der ersten Phase 12 ist entlang der Phasenrichtung 19 betrachtet unmittelbar zwischen der ersten Sicherung 32 und der ersten Schaltvorrichtung 29 platziert. Analog dazu ist die zweite Messvorrichtung 44 in der zweiten Phase 14 angeordnet, die sich entlang der Phasenrichtung 19 betrachtet unmittelbar zwischen der zweiten Sicherung 34 und der zweiten Schaltvorrichtung 31 befindet. Beide Messvorrichtungen 42, 44 sind mit der Steuereinheit 40 verbunden und senden die erfassten Stromstärken als Messdaten 45 an die Steuereinheit 40.

Der Aufbau gemäß FIG 1 erlaubt bei einer Aktivierung des Motorstarters 10 durch sequentielles Einstellen bestimmter Schaltzustände eine differenzierte Diagnose des Motorstarters 10. Ferner wird durch den Aufbau aus FIG 1 ein Motorstarter 10 mit einer reduzierten Anzahl an Bauelementen verwirklicht, der das Prinzip einer 2-von-3-Redundanz, kurz 2oo3-Redundanz, umsetzt. Der erfindungsgemäße Motorstarter 10 bietet für den dreiphasigen Elektromotor 20 damit bei einfacher und wirtschaftlicher Bauweise eine exakte Diagnosemöglichkeit bei gleichzeitig hoher Zuverlässigkeit.

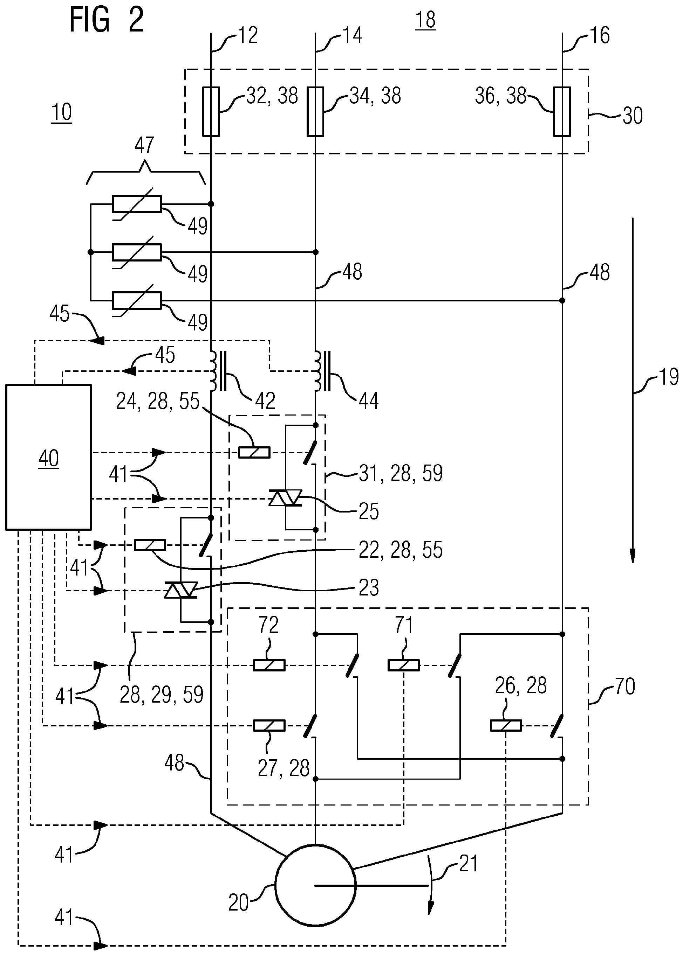

FIG 2 zeigt schematisch den Aufbau einer zweiten Ausführungsform des erfindungsgemäßen Motorstarters 10, der als Wendestarter ausgebildet ist. Der Elektromotor 20 dient zum Antreiben einer mechanischen Last 21 und wird durch eine nicht näher dargestellte Stromversorgung 18 gespeist. Der Motorstarter 10 weist eine erste, eine zweite und eine dritte Phase 12, 14, 16 auf, die mit einem passiven Überstromschutz 30 versehen sind. Der passive Überstromschutz 30 weist eine erste, zweite und dritte Sicherung 32, 34, 36 auf, die auf eine Referenzstromstärke 38 hin ausgelegt sind. Im Motorstarter 20 ist auch ein Überspannungsschutz 47 mit mehreren gekoppelten Varistoren 49 angeordnet. Die Varistoren 49 zweigen von den Phasen ab und führen im bestimmungsgemäßen Betrieb keinen Strom. Des Weiteren ist im Motorstarter 20 gemäß FIG 2 in der ersten Phase 12 eine erste Schaltvorrichtung 29 vorgesehen.

Die erste Schaltvorrichtung 29 umfasst einen ersten elektromechanischen Schalter 22 und einen Halbleiterschalter 23, die in einer Bypass-Schaltung angeordnet sind. Dadurch kann entlang einer Phasenrichtung 19 eine leitfähige Verbindung in der ersten Phase 12 hergestellt werden. Der erste elektromechanische Schalter 22 dient dazu, den in der ersten Phase 12 bestimmungsgemäßen vorliegenden Betriebsstrom 48 dauerhaft zu übertragen. Der erste elektromechanische Schalter 22 ist derart dimensioniert, dass er eine Dauerbetriebsstromgrenze 28 aufweist, die im Wesentlichen dem bestimmungsgemäßen Betriebsstrom 48 entspricht. Infolgedessen weist der erste elektromechanische Schalter 22 gegenüber dem Dauerbetriebszustand verringerte Kapazitätsreserven auf. Ferner weist der erste elektromechanische Schalter 22 eine Betätigungszeit 55 auf. Darunter ist die Dauer zu verstehen, die zwischen dem Erhalten eines Steuerbefehls 41 von einer Steuereinheit 40 des Motorstarter 10 und der abgeschlossenen Umsetzung des Schaltbefehls 41 verstreicht. Der erste elektromechanische Schalter 22 ist langsamer als der erste Halbleiterschalter 23 und definiert somit die Reaktionszeit 59 der ersten Schaltvorrichtung 29.

In der zweiten Phase 14 ist eine zweite Schaltvorrichtung 31 angeordnet, die einen zweiten elektromechanischen Schalter 24 und einen zweiten Halbleiterschalter 25 aufweist. Die zweite Schaltvorrichtung 31 entspricht in Aufbau und Funktionsweise der ersten Schaltvorrichtung 29, so dass die gleichen Bezugszeichen auch an der zweiten Schaltvorrichtung 31 die gleiche Bedeutung haben.

Des Weiteren ist in FIG 2 eine Wendeschaltvorrichtung 70 in der zweiten und dritten Phase 14, 16 angeordnet, die dazu ausgebildet ist, beim Elektromotor 20 einen Rechtslauf oder einen Linkslauf einzustellen. Die Wendeschaltvorrichtung 70 umfasst ein erstes Wende-Relais 71 und ein zweites Wende-Relais 72, über die die zweite Phase 14 mit der dritten Phase 16 verbindbar sind. Ebenso umfasst die Wendeschaltvorrichtung 70 einen ersten und ein zweiten elektromechanischen Schalter, die als erstes und zweites Direkt-Relais 26, 27 ausgebildet sind. Das erste Direkt-Relais 26 entspricht in Aufbau und Funktionsweise dem dritten elektromechanischen Schalter 28 aus FIG 1. Das erste und zweite Direkt-Relais 26, 27 weisen jeweils eine Dauerbetriebsstromgrenze 28 auf, die im Wesentlichen dem Betriebsstrom 48 entspricht, der im bestimmungsgemäßen Betrieb in den drei Phasen 12, 14, 16 vorliegt. Die Direkt-Relais 26, 27 und die Wende-Relais 71, 72 sind separat durch die Steuereinheit 40 über Schaltbefehle 41 betätigbar. Die Betätigung der Direkt-Relais 26, 27 und der Wende-Relais 71, 72 erfolgt derart koordiniert, dass die Direkt-Relais 26, 27 und die Wende-Relais 71, 72 paarweise angesteuert werden. Beim Umschalten zwischen Rechts- und Linkslauf wird zunächst eines der Relais-Paare geöffnet und anschließend das andere geschlossen. Ferner ist durch ein Öffnen beider Relais-Paare der Stromfluss in der zweiten und dritten Phase 12, 14 unterbrechbar.

Des Weiteren sind in der ersten und zweiten Phase 12, 14 jeweils eine Messvorrichtung 42 ,44 angeordnet, die dazu ausgebildet sind, die Stromstärke in den jeweiligen Phasen 12, 14 zu erfassen. Die erste Messvorrichtung 42 in der ersten Phase 12 ist entlang der Phasenrichtung 19 betrachtet unmittelbar zwischen der ersten Sicherung 32 und der ersten Schaltvorrichtung 29 platziert. Analog dazu ist die zweite Messvorrichtung 44 in der zweiten Phase 14 angeordnet, die sich entlang der Phasenrichtung 19 betrachtet unmittelbar zwischen der zweiten Sicherung 34 und der zweiten Schaltvorrichtung 31 befindet. Beide Messvorrichtungen 42, 44 sind mit der Steuereinheit 40 verbunden und senden die erfassten Stromstärken als Messdaten 45 an die Steuereinheit 40.

Der Aufbau gemäß FIG 2 erlaubt bei einer Aktivierung des Motorstarters 10 durch sequentielles Einstellen bestimmter Schaltzustände eine differenzierte Diagnose des Motorstarters 10. Ferner wird durch den Aufbau aus FIG 2 ein Motorstarter 10 mit einer reduzierten Anzahl an Bauelementen verwirklicht, der in jeder Phase das Prinzip einer 2-von-3-Redundanz, kurz 2oo3-Redundanz, umsetzt. Der erfindungsgemäße Motorstarter 10 bietet für den dreiphasigen Elektromotor 20 damit bei einfacher und wirtschaftlicher Bauweise eine exakte Diagnosemöglichkeit bei gleichzeitig hoher Zuverlässigkeit.

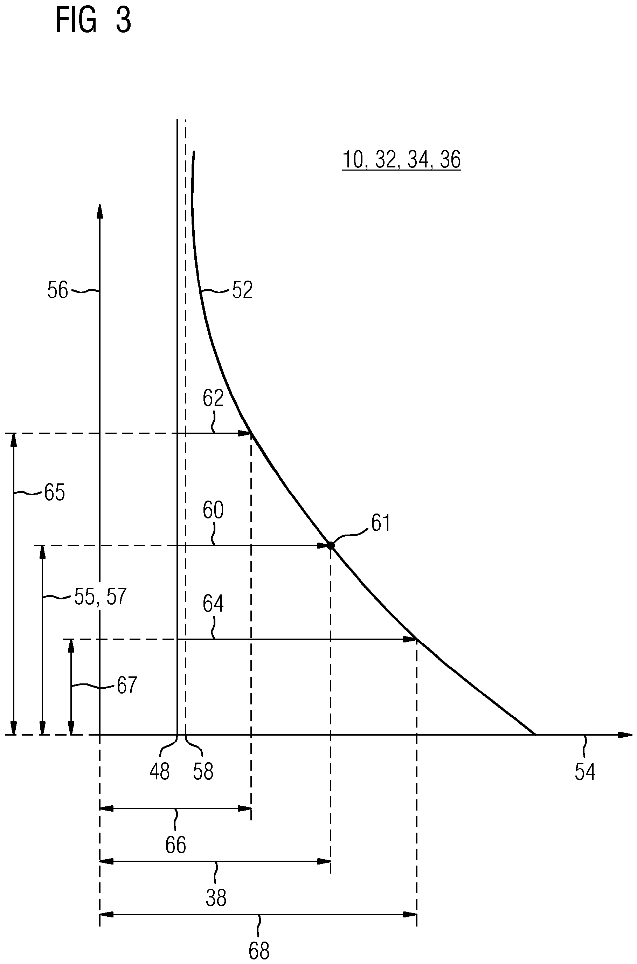

In FIG 3 ist ein Kennlinien-Diagramm einer Sicherung 32, 34, 36 im erfindungsgemäßen Motorstarter 10, wie beispielsweise in FIG 1 oder 2 gezeigt, abgebildet. In FIG 3 bildet die horizontale Achse die Stromstärke 54 ab, die durch die betrachtete Sicherung 32, 34, 36 fließt. Auf der vertikalen Achse ist die Auslösezeit 56 abgebildet, in der die Sicherung 32, 34, 36 reagiert, wenn die jeweilige Stromstärke 54 vorliegt. Zwecks besserer Übersicht ist das Diagramm doppeltlogarithmisch dargestellt. FIG 3 zeigt als vertikale Linie den Betriebsstrom 48, der im bestimmungsgemäßen Betrieb durch die Sicherung 32, 34 36 fließt. Der Betriebsstrom 48 liegt unterhalb eines Auslöseminimums 58. Unterhalb des Auslöseminimums 58 tritt keinerlei Reaktion der Sicherung 32, 34, 36 ein. Die Kennlinie 52 weist bei einer Referenzstromstärke 38 eine Auslösedauer 57 auf, einen Auslegungspunkt 61 charakterisiert. Im Auslegungspunkt 61 entspricht die Auslösezeit 57 einer Reaktionszeit 55 einer nicht näher dargestellten Schaltvorrichtung 29, 31 des Motorstarters 10. Im Auslegungspunkt liegt ein also ein Referenz-Überstromereignis 60 vor, auf das die Sicherung 32, 34, 36 genauso schnell reagiert wie die nicht gezeigte Schaltvorrichtung 29, 31. Diese ist darauf ausgelegt, der Referenzstromstärke 38 im Auslegungspunkt 55 mindestens oder genau für die Auslösedauer 57 bzw. die Reaktionszeit 55 standzuhalten.

Bei einem sogenannten unterkritischen Überstromereignis 62 liegt in der Sicherung 32, 34, 36 eine unterkritische Stromstärke 66 vor, bei der die Auslösedauer 65 die Reaktionszeit 55 übersteigt. In diesem Fall reagiert die Schaltvorrichtung 29, 31 zuerst, so dass eine weitere Maßnahme durch die Sicherung 32, 34, 36 unnötig ist.

Im Fall eines sogenannten überkritischen Überstromereignisses 64 liegt ein gegenüber dem Referenz-Überstromereignis 60 eine erhöhte Stromstärke 68 vor. Die daraus resultierende Auslösedauer 67 ist geringer als die Auslösedauer 57 im Referenzfall bzw. als die Reaktionszeit 55 der Schaltvorrichtungen 29, 31 ist. Bei einem überkritischen Überstromereignis 64 erfolgt zuerst eine Gegenmaßnahme durch die Sicherung 32, 34, 36, so dass das weitere Verhalten der Schaltvorrichtung 29, 31 unerheblich ist.

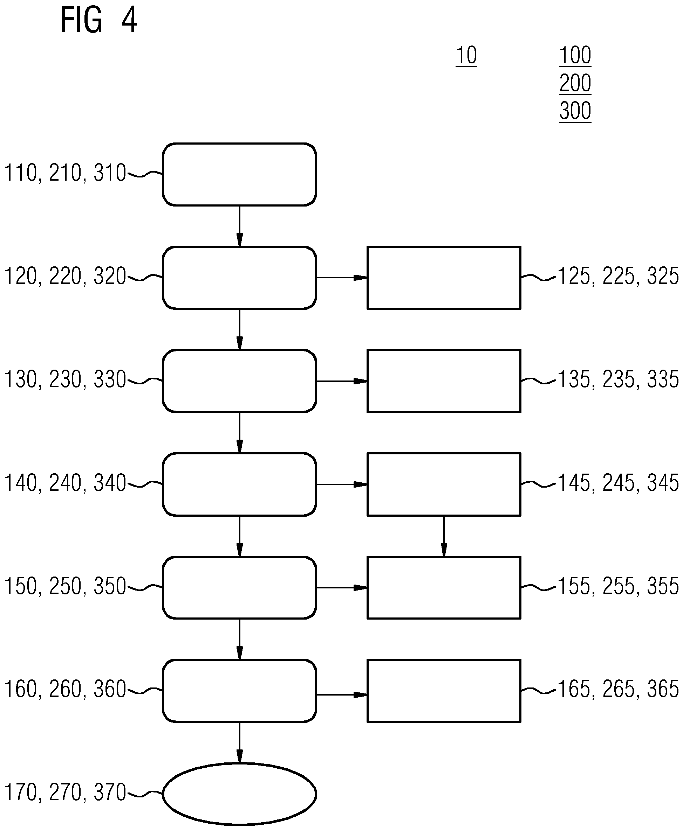

FIG 4 zeigt ein Ablaufdiagramm für die erfindungsgemäßen Diagnoseverfahren 100, 200, 300, das mit dem erfindungsgemäßen Motorstarter 10, wie beispielsweise in FIG 1 und 2 abgebildet, umsetzbar ist. In allen drei Varianten erfolgt zunächst ein erster Verfahrensschritt 110, 210, 310, in dem der Motorstarter 10 in einem inaktiven Zustand bereitgestellt wird. Im Inaktiven Zustand ist der Motorstarter 10 bestimmungsgemäß in einem Schaltzustand, in dem kein Strom fließt. In einem darauffolgenden zweiten Verfahrensschritt 120, 220, 320 wird die nicht näher dargestellte erste Phase 12 im Motorstarter 10 geschlossen. Dies erfolgt im ersten und dritten Diagnoseverfahren 100, 300 mittels eines ersten elektromechanischen Schalters 22. Im zweiten Diagnoseverfahren 200 wird die erste Phase 12 mit dem ersten Halbleiterschalter 23. Zusätzlich wird im zweiten Verfahrensschritt 220 auch die zweite Phase 14 mit dem zweiten Halbleiterschalter 25 geschlossen. Darauf wird in der ersten und zweiten Phase 12, 14 mittels der Messvorrichtungen 42, 44 der Stromfluss erfasst. Wird im zweiten Verfahrensschritt 120, 220, 320 in einer der beiden Phasen 12, 14 ein Stromfluss erfasst, so wird in einem ersten Diagnoseschritt 125, 225, 325 ein Fehler des Motorstarters 20 erkannt. In der ersten Variante des Diagnoseverfahrens 100 wird im ersten Diagnoseschritt 125 ein Defekt des zweiten elektromechanischen Schalters 24 in der zweiten Phase 14, des dritten elektromechanischen Schalters 26 in der dritten Phase 16, oder mindestens eines Halbleiterschalters 23, 25 diagnostiziert. Im zweiten Diagnoseverfahren 200 wird im ersten Diagnoseschritt 225 ein Defekt eines Wende-Relais 71, 72 oder Direkt-Relais 26, 27 erkannt. Im dritten Diagnoseverfahren 300 wird ein Defekt des zweiten elektromechanischen Schalters 24 in der zweiten Phase 14 erkannt.

In einem weiteren Verfahrensschritt 130, 230, 330 wird die erste Phase 12, 14 wieder geöffnet. Zusätzlich dazu wird im ersten Diagnoseverfahren 100, 200 im dritten Verfahrensschritt 130 die dritte Phase 26 mit dem dritten elektromechanischen Schalter 26 geschlossen. Im zweiten Diagnoseverfahren 200 werden im dritten Verfahrensschritt 230 die Wendeschaltvorrichtung 70 die Wende-Relais 71, 72 oder die Direkt-Relais 26, 27 geschlossen, so dass in der zweiten und dritten Phase 14, 16 eine leitfähige Verbindung vorliegt. Auf den dritten Verfahrensschritt 130, 230, 330 folgt ein zweite Diagnoseschritt 135, 235, 335, in dem ein Fehler des Motorstarters 10 erkannt wird, wenn zumindest in der ersten oder zweiten Phase 12, 14 ein Stromfluss erfasst wird. Im ersten und dritten Diagnoseverfahren 100, 300 wird im zweiten Diagnoseschritt 135, 335 ein Defekt des ersten elektromechanischen Schalters 22 oder des ersten Halbleiterschalters 23 in der ersten Phase 12 erfasst. Im zweiten Diagnoseverfahren 200 wird im zweiten Diagnoseschritt 235 eines des beiden Halbleiter 23, 25 oder einer der elektromechanischen Schalter 22, 24 in der ersten bzw. zweiten Phase 12, 14 erfasst.

Anschließend erfolgt in den drei Varianten des Diagnoseverfahrens 100, 200, 300 ein vierter Verfahrensschritt 140, 240, 340, in dem der erste und zweite Halbleiterschalter 23, 35 geschlossen werde. Das Schließen der Halbleiterschalter 23, 25 erfolgt dabei durch ein direktes Ansteuern. Dem vierten Verfahrensschritt 140, 240, 340 folgt ein dritter Diagnoseschritt 145, 245, 345. Wird im dritten Diagnoseschritt 145, 245, 345 ein Stromfluss von Null erfasst, so wird damit ein Fehler des Motorstarters 10 erkannt. Zur näheren Identifikation des Fehlers wird darauf der fünfte Verfahrensschritt 150, 250, 350 durchgeführt. Darin werden der erste und zweite elektromechanische Schalter 22, 24 in der ersten und zweiten Phase 12, 14 geschlossen und daraufhin erneut der Stromfluss in der ersten und zweiten Phase 12, 14 erfasst. Das Resultat der Erfassung nach dem fünften Verfahrensschritt 150, 250, 350 wird im vierten Diagnoseschritt 155, 255, 355 berücksichtigt. Wird im dritten Diagnoseschritt 145, 245, 345 und im vierten Diagnoseschritt 155, 255, 355 ein Stromfluss von Null erfasst wird, wird eine elektrische Lastfreiheit des Elektromotors 20 erkannt. Das bedeutet, dass die anzutreibende mechanische Last 21 nicht mit dem Elektromotor 20 gekoppelt ist.

Wenn im dritten Diagnoseschritt 145, 245, 345 ein Stromfluss von Null erfasst wird und im vierten Diagnoseschritt 155, 255, 355 ein Stromfluss erfasst wird, wird hieraus ein Defekt mindestens eines Halbleiterschalters 23, 25 identifiziert.

Darauf folgt in den drei Varianten des erfindungsgemäßen Diagnoseverfahrens 100, 200, 300 ein sechster Verfahrensschritt 160, 260, 360, in dem das aktive Ansteuern der Halbleiterschalter 23, 25 ausgeleitet wird. Es folgt ein Erfassen des Stromflusses in der ersten und zweiten Phase 12, 14 und eine Auswertung der Erfassung im fünften Diagnoseschritt 165, 265, 365. Wird im fünften Diagnoseschritt 165, 265, 365 ein Stromfluss von Null erfasst, so wird ein Defekt des ersten und/oder zweiten elektromechanischen Schalters 22, 24 identifiziert.

Bei Identifikation eines Fehlers wird in den erfindungsgemä-βen Diagnoseverfahren 100, 200, 300 durch die Steuereinheit 40 auf Basis einer Programmierung eine Warnung ausgegeben und/oder eine zusätzliche Sicherungsmaßnahme durchgeführt. Eine zusätzliche Sicherungsmaßnahme kann ein Blockieren eines Wiedereinschaltens des Motorstarters 10 sein.

Nach dem sechsten Verfahrensschritt 160, 260, 360 erreicht der Motorstarter 10 bei fehlerfreiem Betrieb seinen Dauerbetriebszustand 170, 270, 370, in dem der Strom in allen Phasen 12, 14, 16 über die elektromechanischen Schalter 22, 24, 26 bzw. die Wende-Relais 71, 72 oder Direkt-Relais 26, 27 geführt wird.

## Patentansprüche

1. Motorstarter (10) für einen Elektromotor (20), umfassend:
- eine erste und zweite Phase (12, 14), denen jeweils eine Schaltvorrichtung (29, 31) zugeordnet ist, die je einen elektromechanischen Schalter (22, 24) und einen Halbleiterschalter (23, 25) in Bypass-Schaltung aufweisen, wobei die elektromechanischen Schalter (22, 24) und die Halbleiterschalter (23, 25) durch eine Steuereinheit (40) jeweils separat betätigbar ausgebildet sind,
- eine dritte Phase (16), der ein dritter elektromechanischer Schalter (26) zugeordnet ist, wobei die dritte Phase keinen Halbleiterschalter in Bypass-Schaltung zum dritten elektromechanischen Schalter aufweist,
**dadurch gekennzeichnet, dass**
- die erste, zweite und dritte Phase (12, 14, 16) mit einem passiven Überstromschutz (30) verbunden sind, der je Phase eine Sicherung (32, 34, 36) aufweist und wobei entlang der Phasenrichtung unmittelbar zwischen dem passiven Überstromschutz (30) und mindestens einer der Schaltvorrichtungen (29, 31) eine Messvorrichtung (42, 44) in zumindest einer der ersten oder zweiten Phasen (12, 14) angeordnet ist, und
- mindestens eine der Sicherungen (32, 34, 36) bei einer Referenzstromstärke (38) eine Auslösedauer (57) aufweist, die einer Reaktionsdauer (59) mindestens einer der Schaltvorrichtungen (29, 31) entspricht.

2. Motorstarter (10) nach Anspruch 1, **dadurch gekennzeichnet, dass** mindestens eine der Schaltvorrichtungen (29, 31) eine Dauerbetriebsstromgrenze (28) aufweist, die einem bestimmungsgemäßen Betriebsstrom (48) entspricht.

3. Motorstarter (10) nach Anspruch 1 oder 2, **dadurch gekennzeichnet, dass** mindestens eine der Schaltvorrichtungen (29, 31) dazu ausgebildet ist, der Referenzstromstärke (38) für die Reaktionsdauer (59) standzuhalten.

4. Motorstarter (10) nach einem der Ansprüche 1 bis 3, **dadurch gekennzeichnet, dass** eine erste Messvorrichtung (42) in der ersten Phase (12) angeordnet ist und eine zweite Messvorrichtung (44) in der zweiten Phase (14) angeordnet ist.

5. Motorstarter (10) nach einem der Ansprüche 1 bis 4, **dadurch gekennzeichnet, dass** an zwei Phasen (12, 14, 16) eine Wendeschaltvorrichtung (70) zum Vertauschen der beiden Phasen (12, 14, 16) angeschlossen ist.

6. Diagnoseverfahren (100), umfassend die Schritte:
a) Bereitstellen eines Motorstarters (10) nach einem der vorhergehenden Ansprüche, der als Direktstarter ausgebildet und mit einem dreiphasigen Elektromotor (20) verbunden ist, in einem inaktiven Zustand;
b) Schließen der ersten Phase (12) mit einem ersten elektromechanischen Schalter (22);
c) Öffnen der ersten Phase (12) und Schließen des dritten elektromechanischen Schalters (26) in der dritten Phase (16);
d) Schließen eines ersten Halbleiterschalters (23) in der ersten Phase (12) und eines zweiten Halbleiterschalters (25) in der zweiten Phase (14) durch aktives Ansteuern der Halbleiterschalter (23, 25);
e) Schließen des ersten elektromechanischen Schalters (22) in der ersten Phase (12) und eines zweiten elektromechanischen Schalters (24) in der zweiten Phase (14);
f) Ausleiten des aktiven Ansteuerns der Halbleiterschalter (23, 25);
wobei ein Fehler des Motorstarters (10) erkannt wird, wenn im Schritt b) und /oder im Schritt c) in der ersten und/oder zweiten Phase (12, 14, 16) mittels mindestens einer Messvorrichtung (42, 44) ein Stromfluss erfasst wird, und/oder im Schritt d) in der ersten und/oder zweiten Phase (12, 14) mittels der mindestens einen Messvorrichtung (42, 44) ein Stromfluss von Null erfasst wird.

7. Diagnoseverfahren (200), umfassend die Schritte:
a) Bereitstellen eines Motorstarters (10) nach einem der Ansprüche 1 bis 5, der als Wendestarter ausgebildet und mit einem dreiphasigen Elektromotor (20) verbunden ist, in einem inaktiven Zustand;
b) Schließen eines ersten Halbleiterschalters (23) in der ersten Phase (12) und Schließen eines zweiten Halbleiterschalters (25) in der zweiten Phase (14);
c) Öffnen des ersten und zweiten Halbleiterschalters (23, 25) und Schließen einer Wendeschaltvorrichtung oder einer Direktschaltvorrichtung in der zweiten und der dritten Phase (14, 16);
d) Schließen des ersten und zweiten Halbleiterschalters (23, 25) ;
e) Schließen eines ersten elektromechanischen Schalters (22) in der ersten Phase (12) und eines zweiten elektromechanischen Schalters (24) in der zweiten Phase (14);
f) Ausleiten des aktiven Ansteuerns der Halbleiterschalter (23, 25);
wobei ein Fehler des Motorstarters (10) erkannt wird, wenn im Schritt b) und /oder im Schritt c) in der ersten und/oder zweiten Phase (12, 14, 16) mittels mindestens einer Messvorrichtung (42, 44) ein Stromfluss erfasst wird, und/oder im Schritt d) ein in der ersten und/oder zweiten Phase (12, 14) mittels der mindestens einen Messvorrichtung (42, 44) ein Stromfluss von Null erfasst wird.

8. Diagnoseverfahren (100, 200) nach Anspruch 6 oder 7, **dadurch gekennzeichnet, dass** ein Defekt des ersten oder zweiten Halbleiterschalters (23, 25) erkannt wird, wenn im Schritt d) ein Stromfluss von Null erfasst wird und im Schritt e) von der mindestens einen Messvorrichtung (42, 44) ein Stromfluss erfasst wird.

9. Diagnoseverfahren (100, 200) nach Anspruch 6 oder 7, **dadurch gekennzeichnet, dass** eine elektrische Lastfreiheit des Elektromotors (20) erkannt wird, wenn im Schritt d) und im Schritt e) von der mindestens einen Messvorrichtung (42, 44) ein Stromfluss von Null erfasst wird.

10. Diagnoseverfahren (100, 200) nach einem der Ansprüche 6 bis 9, **dadurch gekennzeichnet, dass** ein Defekt des ersten oder zweiten elektromechanischen Schalters (22, 24) erkannt wird, wenn im Schritt f) von der mindestens einen Messvorrichtung (42, 44) ein Stromfluss von Null erfasst wird.

## Claims

1. Motor starter (10) for an electric motor (20), comprising:
- a first and a second phase (12, 14) which each have an associated switching apparatus (29, 31), which each have an electromechanical switch (22, 24) and a semiconductor switch (23, 25) connected to form a bypass circuit, wherein the electromechanical switches (22, 24) and the semiconductor switches (23, 25) are each designed to be separately operable by a control unit (40),
- a third phase (16), which has an associated third electromechanical switch (26), wherein the third phase does not have a semiconductor switch in the bypass circuit for the third electromechanical switch,
**characterised in that**
- the first, second and third phase (12, 14, 16) are connected to a passive overcurrent protection means (30) which has a fuse (32, 34, 36) for each phase and wherein a measuring apparatus (42, 44) is arranged in at least one of the first or second phases (12, 14) along the phase direction directly between the passive overcurrent protection means (30) and at least one of the switching apparatuses (29, 31), and
- at least one of the fuses (32, 34, 36) has a triggering duration (57) at a reference current intensity (38) corresponding to a reaction time (59) of at least one of the switching apparatuses (29, 31).

2. Motor starter (10) according to claim 1, **characterised in that** at least one of the switching apparatuses (29, 31) has a continuously operating current limit (28) which corresponds to an intended operating current (48).

3. Motor starter (10) according to claim 1 or 2, **characterised in that** at least one of the switching apparatuses (29, 31) is designed to withstand the reference current intensity (38) for the reaction time (59).

4. Motor starter (10) according to one of claims 1 to 3, **characterised in that** a first measuring apparatus (42) is arranged in the first phase (12) and a second measuring apparatus (44) is arranged in the second phase (14).

5. Motor starter (10) according to one of claims 1 to 4, **characterised in that** in two phases (12, 14, 16) a reversible switching device (70) for interchanging the two phases (12, 14, 16) is connected.

6. Diagnostic method (100), comprising the steps:
a) Provision of a motor starter (10) according to one of the preceding claims, which is designed as a direct starter and is connected to a three-phase electric motor (20), in an inactive state;
b) Closing of the first phase (12) with a first electromechanical switch (22);
c) Opening of the first phase (12) and closing of the third electromechanical switch (26) in the third phase (16);
d) Closing of a first semiconductor switch (23) in the first phase (12) and a second semiconductor switch (25) in the second phase (14) by means of active control of the semiconductor switches (23, 25);
e) Closing of the first electromechanical switch (22) in the first phase (12) and a second electromechanical switch (24) in the second phase (14);
f) Rejection of the active control of the semiconductor switches (23, 25);
wherein a fault in the motor starter (10) is detected if in step b) and/or in step c) a current flow is detected by means of at least one measuring apparatus (42, 44) in the first and/or second phase (12, 14, 16), and/or in step d) a current flow of zero is detected by means of the at least one measuring apparatus (42, 44) in the first and/or second phase (12, 14).

7. Diagnostic method (200), comprising the steps:
a) Provision of a motor starter (10) according to one of claims 1 to 5, which is designed as a reversing starter and is connected to a three-phase electric motor (20), in an inactive state;
b) Closing of a first semiconductor switch (23) in the first phase (12) and closing of a second semiconductor switch (25) in the second phase (14);
c) Opening of the first and the second semiconductor switch (23, 25) and closing of a reversible switching device or a direct switching device in the second and the third phase (14, 16);
d) Closing of the first and second semiconductor switch (23,
e) Closing of a first electromechanical switch (22) in the first phase (12) and a second electromechanical switch (24) in the second phase (14);
f) Rejection of the active control of the semiconductor switches (23, 25);
wherein a fault in the motor starter (10) is detected if in step b) and/or in step c) a current flow is detected by means of at least one measuring apparatus (42, 44) in the first and/or second phase (12, 14, 16), and/or in step d) a current flow of zero is detected in the first and/or second phase (12, 14) by means of the at least one measuring apparatus (42, 44).

8. Diagnostic method (100, 200) according to claim 6 or 7, **characterised in that** a defect in the first or second semiconductor switch (23, 25) is detected if in step d) a current flow of zero is detected, and in step e) a current flow is detected by the at least one measuring apparatus (42, 44) .

9. Diagnostic method (100, 200) according to claim 6 or 7, **characterised in that** the freedom of the electric motor (20) from an electrical load is detected if a current flow of zero is detected by the at least one measuring apparatus (42, 44) in step d) and in step e).

10. Diagnostic method (100, 200) according to one of claims 6 to 9, **characterised in that** a defect in the first or second electromechanical switch (22, 24) is detected if a current flow of zero is detected by the at least one measuring apparatus (42, 44) in step f).

## Revendications

1. Démarreur de moteur (10) pour un moteur électrique (20), comportant :
- une première et une deuxième phase (12, 14), auxquelles est respectivement associé un dispositif de commutation (29, 31), lesquelles comprennent chacune un interrupteur électromécanique (22, 24) et un interrupteur à semi-conducteur (23, 25) en circuit de dérivation, dans lequel les interrupteurs électromécaniques (22, 24) et les interrupteurs à semi-conducteur (23, 25) sont respectivement actionnables séparément par une unité de commande (40),
- une troisième phase (16), à laquelle est associé un troisième interrupteur électromécanique (26), dans lequel la troisième phase ne comprend pas d'interrupteur à semi-conducteur en circuit de dérivation avec le troisième interrupteur électromécanique,
**caractérisé en ce que**
- la première, la deuxième et la troisième phase (12, 14, 16) sont reliées à une protection passive contre les surintensités (30), laquelle comprend pour chaque phase un coupe-circuit (32, 34, 36), et dans lequel, le long de la direction de phase, directement entre la protection passive contre les surintensités (30) et au moins l'un des dispositifs de commutation (29, 31), est disposé un dispositif de mesure (42, 44) dans au moins l'une des première et deuxième phases (12, 14), et
- au moins l'un des coupe-circuit (32, 34, 36), à une intensité de courant de référence (38), présente un temps de déclenchement (57) qui correspond à un temps de réaction (59) d'au moins l'un des dispositifs de commutation (29, 31).

2. Démarreur de moteur (10) selon la revendication 1, **caractérisé en ce qu'**au moins l'un des dispositifs de commutation (29, 31) présente une limite de courant de fonctionnement en continu (28) qui correspond à un courant de fonctionnement conforme à sa destination (48).

3. Démarreur de moteur (10) selon la revendication 1 ou la revendication 2, **caractérisé en ce qu'**au moins l'un des dispositifs de commutation (29, 31) est conçu pour résister à l'intensité de courant de référence (38) pendant le temps de réaction (59).

4. Démarreur de moteur (10) selon l'une des revendications 1 à 3, **caractérisé en ce qu'**un premier dispositif de mesure (42) est disposé dans la première phase (12) et un deuxième dispositif de mesure (44) est disposé dans la deuxième phase (14).

5. Démarreur de moteur (10) selon l'une des revendications 1 à 4, **caractérisé en ce qu'**un dispositif de commutation inverseur (70) est connecté à deux phases (12, 14, 16) pour la permutation des deux phases (12, 14, 16).

6. Procédé de diagnostic (100), comportant les étapes suivantes :
a) fourniture d'un démarreur de moteur (10) selon l'une des revendications précédentes, lequel est conçu sous la forme d'un démarreur direct et relié à un moteur électrique triphasé (20), dans un état inactif ;
b) fermeture de la première phase (12) avec un premier interrupteur électromécanique (22) ;
c) ouverture de la première phase (12) et fermeture du troisième interrupteur électromécanique (26) dans la troisième phase (16) ;
d) fermeture d'un premier interrupteur à semi-conducteur (23) dans la première phase (12) et d'un deuxième interrupteur à semi-conducteur (25) dans la deuxième phase (14) par excitation active des interrupteurs à semi-conducteur (23, 25) ;
e) fermeture du premier interrupteur électromécanique (22) dans la première phase (12) et d'un deuxième interrupteur électromécanique (24) dans la deuxième phase (14) ;
f) élimination de l'excitation active des interrupteurs à semi-conducteur (23, 25) ;
dans lequel une défaillance du démarreur de moteur (10) est décelée lorsqu'à l'étape b) et/ou à l'étape c), un flux de courant est détecté dans la première et/ou la deuxième phase (12, 14, 16) au moyen d'au moins un dispositif de mesure (42, 44), et/ou à l'étape d), un flux de courant égal à zéro est détecté dans la première et/ou la deuxième phase (12, 14) au moyen de l'au moins un dispositif de mesure (42, 44).

7. Procédé de diagnostic (200), comportant les étapes suivantes :
a) fourniture d'un démarreur de moteur (10) selon l'une des revendications 1 à 5, lequel est conçu sous la forme d'un démarreur inverseur et relié à un moteur électrique triphasé (20), dans un état inactif ;
b) fermeture d'un premier interrupteur à semi-conducteur (23) dans la première phase (12) et fermeture d'un deuxième interrupteur à semi-conducteur (25) dans la deuxième phase (14) ;
c) ouverture du premier et du deuxième interrupteur à semi-conducteur (23, 25) et fermeture d'un dispositif de commutation inverseur ou d'un dispositif de commutation direct dans la deuxième et la troisième phase (14, 16) ;
d) fermeture du premier et du deuxième interrupteur à semi-conducteur (23, 25) ;
e) fermeture d'un premier interrupteur électromécanique (22) dans la première phase (12) et d'un deuxième interrupteur électromécanique (24) dans la deuxième phase (14) ;
f) élimination de l'excitation active des interrupteurs à semi-conducteur (23, 25) ;
dans lequel une défaillance du démarreur de moteur (10) est décelée lorsque, à l'étape b) et/ou à l'étape c), un flux de courant est détecté dans la première et/ou la deuxième phase (12, 14, 16) au moyen d'au moins un dispositif de mesure (42, 44), et/ou à l'étape d), un flux de courant égal à zéro est détecté dans la première et/ou la deuxième phase (12, 14) au moyen de l'au moins un dispositif de mesure (42, 44).

8. Procédé de diagnostic (100, 200) selon la revendication 6 ou la revendication 7, **caractérisé en ce qu'**un défaut du premier ou du deuxième interrupteur à semi-conducteur (23, 25) est décelé lorsque, à l'étape d), un flux de courant égal à zéro est détecté et, à l'étape e), un flux de courant est détecté par l'au moins un dispositif de mesure (42, 44).

9. Procédé de diagnostic (100, 200) selon la revendication 6 ou la revendication 7, **caractérisé en ce qu'**une absence de charge électrique du moteur électrique (20) est décelée lorsque, à l'étape d) et à l'étape e), un flux de courant égal à zéro est détecté par l'au moins un dispositif de mesure (42, 44).

10. Procédé de diagnostic (100, 200) selon l'une des revendications 6 à 9, **caractérisé en ce qu'**un défaut du premier ou du deuxième interrupteur électromécanique (22, 24) est décelé lorsque, à l'étape f), un flux de courant égal à zéro est détecté par l'au moins un dispositif de mesure (42, 44).
